# EUROPÄISCHE PATENTSCHRIFT

(11) **EP 2 025 534 B1**
(45) Veröffentlichungstag und Bekanntmachung des Hinweises auf die Patenterteilung: **25.02.2015**
(21) Anmeldenummer: 08466020.8
(22) Anmeldetag: 30.07.2008
(51) Int. Cl.: B60B 19/10, F16D 65/12, F16D 65/847, B60T 5/00

(54) **Bremsscheibe mit einer axialen Kuehlung**
Brake disc with axial cooling
Disque de frein avec refroidissement axial

(30) Priorität: 03.08.2007 CZ 20070518
(43) Veröffentlichungstag der Anmeldung: 18.02.2009
(73) Patentinhaber: Skoda Auto A.S., 293 60 Mladá Boleslav (CZ)
(72) Erfinder: Hrdlicka, Martin, 29301 Mlada Boleslav (CZ)

(56) Entgegenhaltungen:
- DE-A1- 1 961 138
- DE-A1- 4 114 761
- DE-A1- 10 129 500
- FR-A- 2 182 494
- FR-A- 2 295 303
- GB-A- 2 142 103
- GB-A- 2 282 197
- GB-A- 2 309 273
- JP-A- 59 001 825
- US-A- 3 171 527

## Beschreibung

Die Erfindung bezieht sich auf die Kühlung der Bremsscheibe des Kraftfahrzeugs mit axialer Durchsaugung der Kühlluft über die seitlichen Öffnungen, die in der Bremsscheibe hergestellt sind.

Die Bremsscheiben beispielsweise eines Personenkraftwagens werden im Verlauf des Bremsprozesses thermisch sehr beansprucht. Beim Bremsen entsteht durch die intensive Reibung zwischen der Bremsscheibe und dem zugehörigen Reibbelag eine bedeutende Menge an thermischer Energie, die eine bedeutende Temperaturerhöhung, vor allem der Bremsscheibe, verursacht. Wenn diese Temperaturerhöhung die zugelassene Grenze überschreitet, kann dieses zu ernsthaften Beanstandungen der Bremsscheibe führen, wie zum Beispiel zu deren Formdeformation, zum Platzen oder Anschmelzen und dadurch kann es zu einer ernsthaften Gefährdung der Nutzer der aufgeführten Verkehrsmittel kommen. Damit diese thermische Belastung abgesenkt wird, werden bei der Konstruktion der Bremsscheiben verschiedene Maßnahmen angewendet. Zu den häufigsten gehören die radialen Kühlungskanäle, durch die mittels Fliehkraft, entstehend bei der Rotation der Bremsscheibe, die kühle Umgebungsluft zwangsweise durchgesaugt wird, welche die thermische Energie vom Körper der Bremsscheibe mitnimmt und dadurch es zu einer geforderten Abkühlung der Bremsscheibe kommt. Bei den sich erhöhenden Anforderungen hinsichtlich der Bremswirkung der Scheibenbremse werden entsprechend die Durchmesser der Kühlungskanäle so erweitert, dass es zur Erhöhung der durchgesaugten Luftmenge kommt. Der Nachteil einer einfachen Durchmessererweiterung der Kühlungskanäle ist jedoch einerseits durch die begrenzte Größe der Bremsscheibe und auch durch die unadäquat langsam anwachsende, kühlende Wärmetauschfläche bei einer Erweiterung des Kühlkanaldurchmessers gegeben.

Es ist aus GB 2142103 A eine Kühlungseinrichtung für Scheibenbremsen an Kraftfahrzeugen bekannt geworden, bei der der Kühlluftstrom die Bremsscheibe mittels einer Leiteinrichtung in einem, nähen Bereich umströmt, so daß eine optimale Kühlung der Bremsscheibe durch Wärmeableitung allseitig sowohl von außen als auch durch innere Belüftung erzielt wird. Eine Kühlung eines Bremssattels ist nicht gelöst.

Die aufgeführten Nachteile werden durch eine Kühlungseinrichtung für Scheibenbremsen mit einer axialen Kühlung laut der Erfindung beseitigt. Sie besteht aus einer Bremsscheibe mit seitlichen Öffnungen, die in Seitenflächen münden, einem Abdeckblech und einer Scheibe, wobei die Bremsscheibe mit einem Bremssattel versehen ist. Die Scheibe ist mit einem Luftleitblech versehen, durch welches die Scheibe an den Bremssattel befestigt ist. Die Scheibe hat weiter Elemente, mittels derer diese an das Abdeckblech befestigt ist.

Der Vorteil des aufgeführten Aufbaus ist die bedeutende Verbesserung der Bremsscheibenkühlung, erzielt durch die Erhöhung der Wärmetauschfläche und der Erhöhung der Gesamtkühlluftmenge, die durch die Bremsscheibe strömt. Ein weiterer Vorteil ist die erhöhte Kühlung des Bremssattels, erzielt durch die Absaugwirkung des Luftleitblechs in dessen Umgebung.

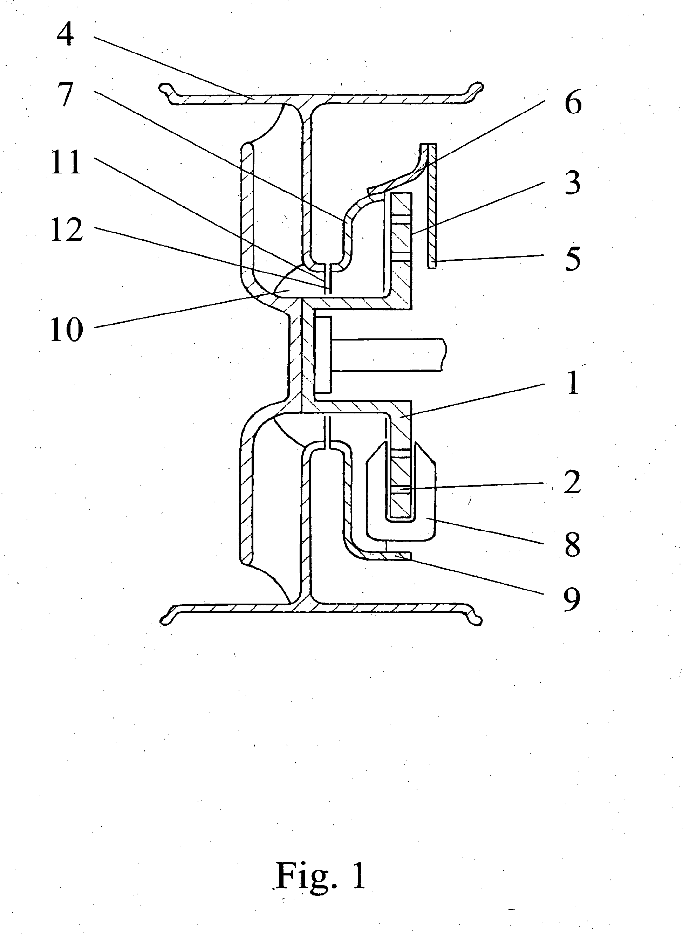

In der Fig. 1 befindet sich die Darstellung des Schnitts der Kühlungseinrichtung für Scheibenbremsen mit einer axialen Kühlung laut der Erfindung.

Das Ausführungsbeispiel der Kühlungseinrichtung für Scheibenbremsen mit einer axialen Kühlung befindet sich in der beigefügten Fig. 1.

Sie besteht aus einer Bremsscheibe 1 mit einem Bremssattel 8, einem Abdeckblech 5 und einer Scheibe 7.

In der Bremsscheibe 1 sind seitliche Öffnungen 2 eingearbeitet, die in Seitenflächen 3 münden. Die seitlichen Öffnungen 2 sind in Achsrichtung so gebohrt, dass diese zwischen den einzelnen radialen Kühlungskanälen (nicht dargestellt) deshalb verlaufen, damit die Strömung durch diese seitlichen Öffnungen 2 nicht durch eine radiale Strömung der Kühlungskanäle beeinflusst wird. Neben der Bremsscheibe 1 im Zwischenraum zwischen einer rotierenden Radfelge 4 und der Bremsscheibe 1 befindet sich auf dem Abdeckblech 5 eine mittels Elemente 6 befestigte Scheibe 7, in welche die von der Seite der Bremsscheibe 1 die seitlichen Öffnungen 2 münden. Zwischen der Scheibe 7 und der Bremsscheibe 1 befindet sich ein Zwischenraum, welcher den Kontakt dieser zwei Teile verhindert. In der Nähe des Bremssattels 8 ist die Scheibe 7 mit einem Luftleitblech 9 versehen. Die Radfelge 4 ist weiter mit einem Absaugrad 10 mit Eintrittsöffnung 11 versehen, welche an der Austrittsöffnung 12 der Scheibe 7 anliegt.

Bei der Fahrt des Kraftfahrzeugs, wenn im Umfeld der Austrittsöffnung 12 der Scheibe 7 ein Druckabfall entsteht, wird aufgrund der Wirkung dieses Niederdrucks die Luft durch die seitlichen Öffnungen 2 gesogen, was zu einer verbesserten Kühlung der Bremsscheibe 1 führt. Wie im Fig. 1 dargestellt, ist der Bremssattel 8 mit dem Luftleitblech 9 überdeckt, was eine verbesserte Strömung des Kühlungsstromes verursacht. Eine besonders große Wirkung wird erzielt, wenn zum Aufbau des Niederdrucks das Absaugrad 10 verwendet wird, welches mit der Eintrittsöffnung 11 unmittelbar mit geringem Spiel an die Austrittsöffnung 12 der Scheibe 7 anliegt.

### Bezugszeichenliste

- 1: Bremsscheibe
- 2: seitliche Öffnung
- 3: Seitenfläche
- 4: Radfelge
- 5: Abdeckblech
- 6: Element
- 7: Scheibe
- 8: Bremssattel
- 9: Luftleitblech
- 10: Absaugrad
- 11: Eintrittsöffnung
- 12: Austrittsöffnung

## Patentansprüche

1. Kühlungseinrichtung für Scheibenbremsen mit einer axialen Kühlung, mit einer Bremsscheibe (1) mit seitlichen Öffnungen (2) die in Seitenflächen (3) münden und mit einem Bremssattel (8), wobei die Kühlungseinrichtung aus einem Abdechblech (5) und einer Scheibe (7) besteht, **dadurch gekennzeichnet, dass** die Scheibe (7) mit einem Luftleitblech (9) versehen ist, mittels welchem die Scheibe (7) an dem Bremssattel (8) befestigt ist und dass die Scheibe (7) mit Elementen (6) versehen ist, mittels welchen sie an das Abdeckblech (5) befestigt ist.

## Claims

1. Cooling device for disc brakes with an axial cooling means, with a brake disc (1) with lateral openings (2) which open into side faces (3), and with a brake calliper (8), the cooling device consisting of a covering plate (5) and a disc (7), **characterized in that** the disc (7) is provided with an air-guiding plate (9), by means of which the disc (7) is fastened to the brake calliper (8), and **in that** the disc (7) is provided with elements (6), by means of which it is fastened to the covering plate (5).

## Revendications

1. Dispositif de refroidissement pour des freins à disque à refroidissement axial, avec un disque de frein (1) comprenant des ouvertures latérales (2) qui débouchent dans des faces latérales (3) et comprenant un étrier de frein (8), le dispositif de refroidissement se composant d'une tôle de recouvrement (5) et d'un disque (7), **caractérisé en ce que** le disque (7) est muni d'une tôle de guidage d'air (9) au moyen de laquelle le disque (7) est fixé à l'étrier de frein (8) et **en ce que** le disque (7) est muni d'éléments (6) au moyen desquels il est fixé à la tôle de recouvrement (5).
